# EUROPÄISCHE PATENTSCHRIFT

(11) **EP 3 559 013 B1**
(45) Veröffentlichungstag und Bekanntmachung des Hinweises auf die Patenterteilung: **01.07.2026**
(21) Anmeldenummer: 17818186.3
(22) Anmeldetag: 22.12.2017
(51) Int. Cl.: C07G 1/00, C08L 97/00

(54) **HERSTELLUNG VON LIGNINPARTIKEL**
PRODUCTION OF LIGNIN PARTICLES
FABRICATION DE PARTICULES DE LIGNINE

(30) Priorität: 23.12.2016 AT 511802016
(43) Veröffentlichungstag der Anmeldung: 30.10.2019
(73) Patentinhaber: Technische Universität Wien, 1040 Wien (AT)
(72) Erfinder: FRIEDL, Anton, 1130 Wien (AT); WEINWURM, Felix, 1160 Wien (AT); BEISL, Stefan, 84339 Unterdietfurt (DE)
(74) Vertreter: SONN Patentanwälte GmbH & Co KG
(86) Internationale Anmeldenummer: PCT/EP2017/084545
(87) Internationale Veröffentlichungsnummer: WO 2018/115516

(56) Entgegenhaltungen:
- WO-A1-2012/126099
- WO-A1-2013/182751
- WO-A1-2016/197233
- DE-A1- 102014 221 238

## Beschreibung

Die vorliegende Erfindung betrifft ein Verfahren zur Herstellung von Ligninpartikel, insbesondere von Nanolignin.

Lignine sind feste Biopolymere bestehend aus phenolischen Makromolekülen, die in die pflanzliche Zellwand eingelagert sind. In Pflanzen sind Lignine vor allem für die Festigkeit des pflanzlichen Gewebes verantwortlich. Bei der Herstellung von Zellulose oder Papier aus pflanzlichem Material wird der feste Zellwandbestandteil Lignin durch verschiedene Verfahren (z.B. Sulfitverfahren, Kraft-Aufschluss, Organosolv Verfahren) von der Zellulose getrennt.

In der US 2014/0275501 wird die Herstellung von Lignin beschrieben, welches einen geringeren Grad an Degradierung aufweist als herkömmlich isoliertes Lignin. Dabei wird aus einer Lignin umfassenden Biomasse mithilfe eines Fluids umfassend subkritisches oder superkritisches Wasser Lignin extrahiert. Das Extraktionsmittel kann neben Wasser beispielsweise Methanol, Ethanol oder Propanol umfassen, wobei ein solches Gemisch mindestens 80 Vol% des organischen Lösungsmittels umfasst. Lignin kann schließlich aus einer ligninhaltigen Extraktionslösung mittels Senkung des pH-Werts auf ca. 2 gefällt werden.

Die WO 2016/197233 betrifft ein Organosolv-Verfahren, mit dessen Hilfe hochreines Lignin umfassend mindestens 97 % Lignin hergestellt werden kann. Dabei wird ein ligninhaltiges Ausgangsmaterial zunächst mit einem Lösungsmittelgemisch umfassend Ethanol und Wasser behandelt, um Verbindungen aus dem Ausgangsmaterial zu entfernen, die sich in den Lösungsmittelgemisch lösen. Anschließend wird das ligninhaltige Material mit einer LewisSäure, die sich ebenfalls in einem Lösungsmittelgemisch umfassend beispielsweise Ethanol und Wasser befindet, behandelt. Schließlich wird Lignin durch Senkung des pH-Werts aus der ligninhaltigen Lösung gefällt.

Die NZ 538446 betrifft Verfahren zur Behandlung von ligninhaltigen Materialien, wie z.B. Holz, um beispielsweise Wirkstoffe in diese einzubringen. Ein Verfahren zur Herstellung von Ligninpartikel wird jedoch nicht geoffenbart.

In der WO 2010/058185 wird ein Verfahren zur Behandlung von Biomasse beschrieben, im Zuge dessen die Biomasse mithilfe von Ultraschall und einem wässrigen Lösungsmittelsystem in Lignin und anderen Komponenten getrennt wird. In einem möglichen Verfahrensschritt wird gemäß dieser internationalen Patentanmeldung Lignin mittels Verdampfung aus einem mit Wasser nicht mischbaren Lösungsmittel gewonnen.

Auch in der WO 2012/126099 wird ein Organosolv-Verfahren beschrieben, mit dessen Hilfe aromatische Verbindungen, d.h. Lignin, aus einer Biomasse isoliert und durch Verdampfung bzw. Senkung des pH-Werts gefällt werden können.

In der WO 2013/182751 werden Verfahren zur Fraktionierung von Lignin offenbart, bei dem zunächst Lignin mit einem organischen Lösungsmittel und Wasser gelöst wird. Anschließend wird die Mischung ultrafiltriert, so dass Ligninfraktionen hergestellt werden können, die ein bestimmtes molekulares Gewicht aufweisen. Anschließend kann das Lignin gefällt werden.

Die WO 2010/026244 betrifft u.a. verschiedene Organosolv-Verfahren, mit denen Cellulose hergestellt werden kann, das u.a. mit Lignin angereichert ist.

Die DE 10 2014 221 238 A1 betrifft ein Verfahren zur Fällung von Lignin aus Organosov-Kochlaugen.

Lignine und insbesondere Nanolignin findet in einer Vielzahl von industriellen Anwendungen Eingang. Das gewonnene Nanolignin kann vielfältig weiterbearbeitet werden, indem z.B. chemische (z.B. medizinisch oder enzymatisch aktive) Liganden am Nanolignin fixiert werden oder das Nanolignin durch Ultraschallbehandlung UV-schützend wirksam gemacht werden kann.

Nanolignin basierte Kunststoffe zeichnen sich durch hohe mechanische Stabilität und hydrophobe Eigenschaften (schmutzabweisend) aus. Dadurch eignen sie sich für viele Einsatzgebiete, u.a. z.B. für den Einsatz in der Automobilindustrie. Im Speziellen kann Nanolignin in unterschiedlichen Arten von Füllungen, als verstärkende Fasern u.Ä. Anwendung finden. Die einschlägige Literatur zeigt z.B., dass eine kontrollierte Polymerisation von Nanoligninpartikeln mit Styrol oder Methylmethacrylat eine Verzehnfachung der Materialbelastbarkeit gegenüber einer Lignin/Polymer Mischung ergibt.

Nanolignin auf Textiloberflächen aufgebracht erwirkt einen aktiven Schutz gegen UV-Strahlung. Dies kann zu einem Einsatz in der Herstellung funktionaler Textilien führen.

Die feuchtigkeitsabweisenden und antibakteriellen Eigenschaften von Nanolignin eröffnen Anwendungsbereiche in der Verpackungsindustrie (Herstellung spezieller Verpackungsfolien), insb. im Bereich der Verpackung von Lebensmitteln.

Lignin-Nanopartikel können mit Silberionen durchzogen und mit einer kationischen Polyelektrolytschicht beschichtet sein, so dass sich eine natürlich abbaubare und "grüne" Alternative zu Silbernanopartikeln ergibt.

Durch die hohe Biokompatibilität und antibakterielle Wirkung eignet sich Nanolignin u.a. für den Einsatz in Biofilmen für Implantate. Ebenso kann Nanolignin in der Pharmaindustrie z.B. im Bereich der Wirkstoffverabreichung eingesetzt werden.

Partikel aus Lignin, insbesondere Nanopartikel aus Lignin, werden derzeit nur durch Lösung von bereits isoliertem und gefälltem Lignin (meist unter Verwendung von Ligninsulfonate oder Lignosulfonatquellen z.B. Schwarzlauge oder Alkalilignin) hergestellt. Dabei weist das erstmalig gefällte Lignin keine Partikel- bzw. Nanopartikelstruktur auf. Diese Strukturen können dadurch erzeugt werden, in dem bereits gefälltes Lignin einerseits gelöst und anschließend nochmals gefällt oder andererseits gemahlen wird (siehe CN 103145999). Ligninpartikel bzw. Nanolignin kann auch aus Schwarzlauge, ein ligninreiches Nebenprodukt bzw. Abfallprodukt bei der Papier- bzw. Zelluloseherstellung, mittels CO₂ Hochdruckextraktion hergestellt werden (CN 102002165). In CN 104497322 wird ein Verfahren beschrieben, in dem eine mit Ultraschall behandelte Ligninlösung tropfenweise in deionisiertes Wasser gegeben wird und anschließend Nanolignin mittels Zentrifuge abgetrennt wird.

Sämtliche bekannten Verfahren zur Herstellung von Ligninpartikel bzw. Nanolignin sind verfahrenstechnisch aufwändig. Es ist daher eine Aufgabe der vorliegenden Erfindung ein vereinfachtes Verfahren zur Herstellung von Ligninpartikel bereitzustellen, welches die Nachteile des Standes der Technik nicht aufweist.

Die vorliegende Erfindung betrifft daher ein Verfahren zur Herstellung von Ligninpartikel mit einer mittleren Größe von 10 bis 800 nm umfassend die Schritte
a) Extraktion von Lignin aus einem ligninhaltigen Ausgangsmaterial mittels eines Gemisches umfassend mindestens ein organisches Lösungsmittel und Wasser und
b) Fällung des in Lösung befindlichen Lignins aus Schritt a),
wobei das in Lösung befindliche Lignin durch Senkung des pH Werts in Schritt b) gefällt wird, wobei der pH Wert durch Zugabe einer Säure mit einer spezifischen Dosiergeschwindigkeit von 0,05 bis 10 mL/min pro g Extraktlösung gesenkt wird.

Es hat sich überraschender Weise gezeigt, dass Ligninpartikel direkt aus einem ligninhaltigen Extrakt herstellbar sind, der durch Extraktion von Lignin aus einem ligninhaltigen Ausgangsmaterial mittels eines Gemisches umfassend mindestens ein organisches Lösungsmittel und Wasser erhältlich ist. Bisherige Verfahren zur Herstellung von Ligninpartikel machten es erforderlich, dass bereits gefälltes unstrukturiertes Lignin entweder durch Mahlen oder einem weiteren Fällungsschritt in Ligninpartikel umgewandelt wird. Diese Zwischenschritte sind mit dem erfindungsgemäßen Verfahren nicht mehr notwendig, da Ligninpartikel direkt aus dem in Schritts a) gewonnenen Extrakt gefällt werden können. D.h. mit dem erfindungsgemäßen Verfahren ist es möglich Ligninpartikel herzustellen, die keiner weiteren wesentlichen Verfahrensschritte benötigen. Zudem zeigte sich, dass die Ligninpartikel vorzugsweise zumindest 90%, noch mehr bevorzugt mindestens 95%, noch mehr bevorzugt mindestens 96%, noch mehr bevorzugt mindestens 97%, noch mehr bevorzugt mindestens 98%, bezogen auf Zuckerverunreinigungen aus Lignin bestehen.

Das erfindungsgemäße Verfahren kann abgesehen von den Verfahrensschritten a) und b) optionale Zwischenschritte zum Entfernen von nicht gelösten Bestandteilen aus dem ligninhaltigen Ausgangsmaterial und einen optionalen finalen Schritt zur Isolierung der gefällten Ligninpartikel umfassen. Das erfindungsgemäße Verfahren könnte somit folgende zusätzliche Verfahrensschritte a1) und b1) nach Schritt a) bzw. b) umfassen:
a1) optionales Isolieren des in Schritt a) erzeugten ligninhaltigen Extrakts von nicht löslichen Bestandteilen des ligninhaltigen Ausgangsmaterials b1) optionales Isolieren und Waschen der Ligninpartikel aus Schritt b).

Gemäß einer bevorzugten Ausführungsform der vorliegenden Erfindung umfasst die zur Fällung von Ligninpartikel bestimmte Lösung in Schritt b) maximal 1%, vorzugsweise maximal 0,8%, noch mehr bevorzugt maximal 0,5%, noch mehr bevorzugt maximal 0,3%, noch mehr bevorzugt maximal 0,2%, nicht lösliche Bestandteile, insbesondere ist diese frei von nicht löslichen Bestandteilen bzw. partikelfrei.

Der in Schritt a) des erfindungsgemäßen Verfahrens gewonnene Lignin-haltige Extrakt umfasst vorzugsweise einen geringen oder im Wesentlichen keinen Anteil an nicht löslichen bzw. festen Bestandteilen auf. Dies hat den Vorteil, dass die aus einem solchen Extrakt gefällten Ligninpartikel eine hohe Reinheit aufweisen und nicht nochmals gelöst und gefällt werden müssen.

Der in Schritt a) des erfindungsgemäßen Verfahrens gewonnene Lignin-haltige Extrakt kann von nicht löslichen festen Bestandteilen durch Filtration oder Zentrifugation, insbesondere Ultrazentrifugation bei z.B. mehr als 15.000 X g, und ähnlichen Verfahren gereinigt werden.

Um die mit dem erfindungsgemäßen Verfahren erzeugten Ligninpartikel für die weitere Verarbeitung zu lagern, können diese nach Schritt b) isoliert, gewaschen und gegebenenfalls getrocknet werden. Zum Waschen der Ligninpartikel können keine Flüssigkeiten und Verfahren verwendet werden, die zur Auflösung der Ligninpartikel führen könnten. Daher werden vorzugsweise Waschlösungen eingesetzt, die entweder kein organisches Lösungsmittel oder organische Lösungsmittel in geringen Mengen (z.B. weniger als 2%, vorzugsweise weniger als 1%, noch mehr bevorzugt weniger als 0,5%) umfassen.

Ein weiterer wesentlicher Vorteil der vorliegenden Erfindung ist die Vermeidung von Schwefelverbindungen, die üblicherweise bei der Isolierung von Lignin aus ligninhaltigen Rohstoffen wie Holz bzw. bei der Gewinnung von Zellulose, bei der Lignin als Nebenprodukt anfällt, eingesetzt werden. Vor allem beim Kraft-Aufschluss und beim Sulfitverfahren werden umweltschädigende Schwefelverbindungen eingesetzt.

"Ligninpartikel" bzw. dessen Synonym "partikuläres Lignin", wie hierin verwendet, sind Partikel umfassend mindestens 80%, vorzugsweise mindestens 85%, noch mehr bevorzugt mindestens 90%, noch mehr bevorzugt mindestens 95%, noch mehr bevorzugt mindestens 97%, noch mehr bevorzugt mindestens 98%, noch mehr bevorzugt mindestens 99%, noch mehr bevorzugt mindestens 99,9%, bzw. bestehend aus Lignin. Die Partikel weisen eine mittlere Größe von 10 bis 800 nm, vorzugsweise von 10 bis 700 nm, noch mehr bevorzugt von 10 bis 600 nm, noch mehr bevorzugt von 10 bis 500 nm, noch mehr bevorzugt von 10 bis 400 nm, noch mehr bevorzugt von 10 bis 300 nm, noch mehr bevorzugt von 10 bis 200 nm, noch mehr bevorzugt von 10 bis 100 nm, auf. Mit dem erfindungsgemäßen Verfahren ist es insbesondere möglich Ligninpartikel mit einer mittleren Größe von weniger als 100 nm, vorzugsweise 10 bis 100 nm, herzustellen. Ligninpartikel mit den oben angeführten Größen im Nanometerbereich können auch als "Nanolignin" oder als "Nanoligninpartikel" bezeichnet werden.

Die Ligninpartikel, die mit dem erfindungsgemäßen Verfahren hergestellt werden können, weisen eine im Wesentlichen runde bzw. leicht ovale Form auf. Der Durchmesser nicht exakt runder Ligninpartikel errechnet sich aus der Distanz, der zwei am Partikel am weitesten entfernten Punkte.

"Ligninhaltiges Ausgangsmaterial", wie hier verwendet, umfasst jedes Material, welches Lignin enthält. Besonders bevorzugt werden Ausgangsmaterialien, die in der Natur natürlicherweise vorhanden sind bzw. daraus hergestellt werden können, sofern diese noch Lignin umfassen, eingesetzt.

Gemäß einer bevorzugten Ausführungsform der vorliegenden Erfindung umfasst das Gemisch umfassend mindestens ein organisches Lösungsmittel und Wasser 10 bis 90 Gew%, vorzugsweise 20 bis 80 Gew%, noch mehr bevorzugt 30 bis 70 Gew.%, noch mehr bevorzugt 40 bis 65 Gew%, noch mehr bevorzugt 50 bis 65 Gew%, organisches Lösungsmittel umfasst.

Um Lignin aus einem ligninhaltigen Ausgangsmaterial herauszulösen bzw. in Lösung zu bringen, ist eine bestimmte Menge organisches Lösungsmittel notwendig. Daher umfasst das Gemisch zur Extraktion des Lignins die oben angeführten Mengen an organischem Lösungsmittel. Erfindungsgemäß kann das Extraktionsgemisch auch mehr als eine Art von organischem Lösungsmittel umfassen (z.B. mindestens zwei, vorzugsweise mindestens drei, noch mehr bevorzugt mindestens vier, organische Lösungsmittel). Die Gesamtmenge an organischem Lösungsmittel im Extraktionsgemisch bleibt in den zuvor genannten Bereichen, auch wenn das Gemisch mehr als ein organisches Lösungsmittel umfasst.

Gemäß einer weiteren bevorzugten Ausführungsform der vorliegenden Erfindung ist das mindestens eine organische Lösungsmittel ein Alkohol, wobei der Alkohol ein C1 bis C5 Alkohol, welcher vorzugsweise ausgewählt ist aus der Gruppe bestehend Methanol, Ethanol, Propanol, Butanol, Pentanol, Ethan-1,2-diol, Propan-1,2-diol, Propan-1,2,3-triol, Butan-1,2,3,4-tetraol und Pen- tan-1,2,3,4,5-pentol.

Bevorzugt werden im erfindungsgemäßen Verfahren Alkohole verwendet, die eine Kettenlänge von ein (C1) bis fünf (C5), vorzugsweise ein, zwei, drei, vier oder fünf, Kohlenstoffatome aufweisen. Besonders bevorzugt werden Ethanol und/oder Methanol verwendet. Werden zwei oder mehr Alkohole zur Extraktion von Lignin eingesetzt, werden bevorzugt Ethanol und Propanol mit Wasser vermischt.

Gemäß einer weiteren bevorzugten Ausführungsform der vorliegenden Erfindung ist mindestens eine organische Lösungsmittel ein Keton, wobei das mindestens eine Keton vorzugsweise ausgewählt ist aus der Gruppe bestehend aus Aceton und 2-Butanone.

Das Extraktionsgemisch zur Extraktion von Lignin kann neben Wasser mindestens ein Keton als organisches Lösungsmittel umfassen. Das mindestens eine Keton kann mit mindestens einem Alkohol kombiniert werden. Bevorzugt sind dabei Mischungen, die Ethanol, und Aceton in unterschiedlichen Verhältnissen zueinander umfassen.

Die Extraktion des Lignins aus einem ligninhaltigen Ausgangsmaterial wird vorzugsweise bei einer Temperatur von 100 bis 230°C, vorzugsweise von 120 bis 230°C, noch mehr bevorzugt von 140 bis 210°C, noch mehr bevorzugt von 150 bis 200°C, noch mehr bevorzugt von 160 bis 200°C, noch mehr bevorzugt von 170 bis 195°C, noch mehr bevorzugt von 175 bis 190°C, durchgeführt.

Die Extraktionseffizienz kann durch eine Temperaturerhöhung während des Extraktionsschritts a) im Verfahren der vorliegenden Erfindung erhöht werden. Daher wird die Extraktion bei den oben genannten Temperaturen durchgeführt.

Gemäß einer besonders bevorzugten Ausführungsform der vorliegenden Erfindung wird die Extraktion bei einem Druck von 1 bis 100 bar, vorzugsweise 1,1 bis 90 bar, noch mehr bevorzugt 1,2 bis 80 bar, noch mehr bevorzugt 1,3, bis 70 bar, noch mehr bevorzugt 1,4 bis 60 bar, durchgeführt.

Die Extraktion des Lignins aus dem Ausgangsmaterial wird vorzugsweise bei erhöhtem Druck, vorzugsweise in einem Druckbehälter, durchgeführt. Dadurch werden Bedingungen geschaffen, die das Lösen des Lignins noch mehr fördern.

Gemäß einer bevorzugten Ausführungsform der vorliegenden Erfindung wird die Extraktion für 5 bis 200 Minuten, vorzugsweise für 10 bis 150 Minuten, noch mehr bevorzugt für 15 bis 100 Minuten, noch mehr bevorzugt für 15 bis 80 Minuten, noch mehr bevorzugt für 30 bis 70 Minuten, noch mehr bevorzugt für 55 bis 65 Minuten, durchgeführt.

Schritt a) des erfindungsgemäßen Verfahrens wird vorzugsweise für eine bestimmte Zeit durchgeführt. Die Extraktionsdauer kann u.a. durch die Wahl des mindestens einen organischen Lösungsmittel, vorzugsweise des mindestens einen Alkohols und/oder des mindestens einen Ketons, der Temperatur und des Drucks beeinflusst werden. Zudem spielt auch die Art und Beschaffenheit des ligninhaltigen Ausgangsmaterials bei der Extraktionsdauer eine Rolle. Erfindungsgemäß hat sich gezeigt, dass unabhängig von den gewählten Parametern 5 bis 200 zu einem guten Extraktionsergebnis führt. Die Extraktionseffizienz des erfindungsgemäßen Verfahrens aus einem ligninhaltigen Ausgangsmaterials hängt auch vom eingesetzten Material und dessen Aufarbeitung ab. Es hat sich erfindungsgemäß gezeigt, dass die Extraktion im Bereich von 5 bis 200 Minuten besonders vorteilhaft hinsichtlich Extraktionseffizienz, Bildung möglicher Abbauprodukte und Kosten ist.

Gemäß einer weiteren bevorzugten Ausführungsform der vorliegenden Erfindung ist das ligninhaltige Ausgangsmaterial ausgewählt aus der Gruppe bestehend aus Holz, Stroh, vorzugsweise Weizenstroh oder Roggenstroh, und Rinde.

Prinzipiell eignen sich sämtliche Ausgangsmaterialien, welche Lignin enthalten, wobei besonders bevorzugt pflanzliche Rohstoffe eingesetzt werden. Ferner können als ligninhaltige Ausgangsmaterialien auch Abfall- oder Nebenprodukte anderer Verfahren eingesetzt werden. So eignen sich beispielsweise auch ligninhaltige Nebenprodukte aus der Papier- und Zelluloseherstellung zur Herstellung der erfindungsgemäßen Ligninpartikel.

Um die Extraktion des Lignins aus dem ligninhaltigen Ausgangsmaterial so effizient wie möglich zu gestalten bzw. um eine hohe Extraktionseffizienz zu erzielen, weist das ligninhaltige Ausgangsmaterial, das unmittelbar zur Extraktion des Lignins eingesetzt wird, vorzugsweise eine mittlere oder maximale Größe von 0,5 bis 50 mm, vorzugsweise von 0,5 bis 40 mm, noch mehr bevorzugt von 0,5 bis 30 mm, noch mehr bevorzugt von 1 bis 25 mm, noch mehr bevorzugt von 1 bis 20 mm, noch mehr bevorzugt von 5 bis 10 mm, auf.

Vor Durchführung der Extraktion des Lignins wird das zu extrahierende ligninhaltige Ausgangsmaterial zerkleinert, um die bevorzugte Größe bzw. Größenverteilung zu erzielen. Dabei wird das Rohmaterial, aus dem das ligninhaltige Ausgangsmaterial hergestellt wird, durch Vermahlen, Schneiden und ähnlichen Methoden zerkleinert. Mit Hilfe eines oder mehrerer Siebe, beispielsweise, können jene Bestandteile des bearbeiteten Rohmaterials, die nicht die bevorzugte Größe bzw. Größenverteilung aufweisen, abgetrennt werden.

Gemäß einer bevorzugten Ausführungsform der vorliegenden Erfindung werden im Extraktionsgemisch vorhandene feste Partikel nach Schritt a) entfernt, um einen ligninhaltigen Überstand zu erhalten.

Nach Durchführung der Extraktion, nach der sich Lignin in Lösung befindet, werden die festen Bestandteile des Gemisches entfernt. Hierfür eignen sich Sieb- und Filtermethoden und Zentrifugation. Besonders bevorzugt ist das Vorsehen eines oder mehrerer Zentrifugierschritte, die evtl. mit einem anderen Verfahren (z.B. Sieb oder Filter) kombiniert werden kann.

Gemäß einer weiteren bevorzugten Ausführungsform der vorliegenden Erfindung werden die vom Extraktionsgemisch abgetrennten festen Partikel mit demselben Gemisch aus Schritt a) umfassend mindestens ein organisches Lösungsmittel und Wasser behandelt und der daraus erhaltene Überstand wird dem ligninhaltigen Überstand aus einem vorherigen Verfahrensschritt zugeführt.

Um die Effizienz der Extraktion zu steigern und im bereits behandelten ligninhaltigen Ausgangsmaterial verbliebenes Lignin herauszulösen, wird der feste Rückstand aus dem ersten oder, wenn es mehrere Extraktionsschritte gibt, aus dem oder einem vorherigen Schritt nochmals mit einem organisches Lösungsmittel/Wasser Gemisch versetzt und behandelt. Vorzugsweise ist dieses organisches Lösungsmittel/Wasser Gemisch im Wesentlichen ident mit organisches Lösungsmittel/Wasser Gemisch, das in Schritt a) verwendet wurde.

Gemäß der vorliegenden Offenbarung wird das in Lösung befindliche Lignin durch Senkung des pH Werts und/oder mittels Reduktion der Konzentration des organischen Lösungsmittels im organischen Lösungsmittel/Wasser Gemisch, insbesondere durch Verdampfung des organischen Lösungsmittels aus dem organischen Lösungsmittel/Wasser Gemisch oder durch Zugabe von Wasser oder eines Säure/Wasser Gemischs, in Schritt b) gefällt. Gemäß der beanspruchten Erfindung wird das in Lösung befindliche Lignin durch Senkung des pH Werts in Schritt b) gefällt, wobei der pH Wert durch Zugabe einer Säure mit einer spezifischen Dosiergeschwindigkeit von 0,05 bis 10 mL/min pro g Extraktlösung gesenkt wird.

Nach der Extraktion und gegebenenfalls nach Entfernung der unlöslichen und festen Bestandteile aus dem Extraktionsgemisch werden aus der Lignin umfassenden Lösung Ligninpartikel, vorzugsweise Nanolignin, gefällt. Die Fällung erfolgt durch Reduktion der Menge bzw. Konzentration an organischem Lösungsmittel im Extrakt, in dem beispielsweise das organische Lösungsmittel/Wasser Gemisch verdampft wird. Durch die Zugabe von Wasser zum organischen Lösungsmittel/Wasser Gemisch kann die Konzentration des organischen Lösungsmittels ebenfalls gesenkt werden. Entscheidend ist jedenfalls die Reduktion des Lösungsmittels im Extraktionsgemisch, um die Fällung von Lignin zu ermöglichen. Dabei kann das Gesamtvolumen beispielsweise durch Zugabe von Wasser, vorzugsweise destillierten oder entionisierten Wasser, im Wesentlichen konstant beibehalten werden. Alternativ dazu oder zusätzlich können durch die Senkung des pH Werts, in dem die Extraktionslösung angesäuert wird, Ligninpartikel gefällt werden. Die Extraktionslösung weist vor dem Extraktionsschrittt vorzugsweise einen pH Wert im neutralen Bereich, vorzugsweise einen pH Wert zwischen 6,5 und 7,5, noch mehr bevorzugt zwischen 6,7 und 7,3, noch mehr bevorzugt zwischen 6,8 und 7,2, noch mehr bevorzugt zwischen 6,9 und 7,1, insbesondere von ca. 7, auf.

Es hat sich als besonders vorteilhaft für die Herstellung von Ligninpartikel erwiesen, wenn das organische Lösungsmittel mit einer bestimmten Geschwindigkeit aus der Extraktionslösung entfernt wird. Aus diesem Grund ist es bevorzugt, dass das organische Lösungsmittel aus dem Lignin-haltigen organischen Lösungsmittel/Wasser Gemisch mit einer Geschwindigkeit von 0,1 bis 2 Gew%/min, vorzugsweise von 0,1 bis 1 Gew%/min, noch mehr bevorzugt von 0,1 bis 0,8 Gew%/min, noch mehr bevorzugt von 0,1 bis 0,6 Gew%/min, noch mehr bevorzugt von 0,1 bis 0,5 Gew%/min, noch mehr bevorzugt von 0,1 bis 0,4 Gew%/min, noch mehr bevorzugt von 0,2 bis 0,35 Gew%/min, reduziert wird.

Das organische Lösungsmittel des organischen Lösungsmittel/Wasser Gemisches wird im Zuge der Entfernung bzw. Reduktion der Konzentration des Lösungsmittels (z.B mittels Verdampfung, Zugabe von Wasser oder eines Säure/Wasser Gemischs) nach Schritt a) vorzugsweise einem Druck von 50 bis 500 mbar, vorzugsweise von 50 bis 300 mbar, noch mehr bevorzugt von 50 bis 200 mbar, noch mehr bevorzugt von 75 bis 200 mbar, noch mehr bevorzugt von 100 bis 200 mbar, noch mehr bevorzugt von 120 bis 180 mbar, noch mehr bevorzugt von 140 bis 160 mbar, noch mehr bevorzugt von 140 bis 150 mbar, ausgesetzt, um Ligninpartikel zu fällen.

Um den Wassergehalt und den Gehalt an organischem Lösungsmittel in der Extraktionslösung zu reduzieren wird der Druck in dem Behältnis, in dem sich die Extraktionslösung befindet mit Hilfe einer Pumpe zumindest in den Unterdruckbereich, vorzugsweise in den Vakuumbereich, reduziert. Dadurch gehen das organische Lösungsmittel und Wasser in den gasförmigen Zustand über und können somit aus der Extraktionslösung entfernt werden.

Gemäß einer bevorzugten Ausführungsform der vorliegenden Erfindung wird das organische Lösungsmittel/Wasser Gemisch einer Temperatur von 20 bis 60°C, vorzugsweise von 25 bis 55°C, noch mehr bevorzugt von 30 bis 50°C, ausgesetzt.

Durch Erhöhung der Temperatur der Extraktionslösung kann die Verdampfung beschleunigt werden.

Gemäß einer besonders bevorzugten Ausführungsform der vorliegenden Erfindung wird das in Lösung befindliche Lignin vor dessen Fällung beispielsweise durch Reduktion der Konzentration des organischen Lösungsmittels im organischen Lösungsmittel/Wasser Gemisch, insbesondere durch Verdampfung des organischen Lösungsmittels/Wasser Gemisches, und/oder durch Senkung des pH Werts auf 0,1 bis 50 g Lignin/L organisches Lösungsmittel/Wasser Gemisch, vorzugsweise auf 0,5 bis 40 g/L, noch mehr bevorzugt auf 1 bis 30 g/L, noch mehr bevorzugt auf 2 bis 20 g/L eingestellt.

Gemäß einer weiteren bevorzugten Ausführungsform der vorliegenden Erfindung wird durch Zugabe von Wasser, vorzugsweise destillierten Wasser, das verdampfte Volumen teilweise oder ganz ersetzt. Durch das Absenken der Konzentration des organischen Lösungsmittels erfolgt die Ausfällung der Ligninpartikel.

Gemäß einer weiteren bevorzugten Ausführungsform der vorliegenden Erfindung wird der pH Wert des organischen Lösungsmittel/Wasser Gemisches bei Fällung des Lignins mittels Reduktion der Konzentration des organischen Lösungsmittels im organischen Lösungsmittel/Wasser Gemisch durch Zugabe eines Wasser-Säuregemisches mit einem pH Wert von 1 bis 6, vorzugsweise von 1,2 bis 5, noch mehr bevorzugt von 1,3 bis 4, noch mehr bevorzugt von 1,5 bis 3, noch mehr bevorzugt von 1,8 bis 2,5, gesenkt und damit das verdampfte Volumen gegebenenfalls teilweise oder ganz ersetzt. Auch in dieser Ausführungsform des erfindungsgemäßen Verfahrens umfasst die Extraktionslösung vorzugsweise eine bestimmte Konzentration Lignin bzw. wird auf diese eingestellt. Das im organischen Lösungsmittel/Wasser Gemisch befindliche Lignin weist somit vor der Senkung des pH Werts vorzugsweise 0,1 bis 50 g Lignin/L organisches Lösungsmittel/Wasser Gemisch, vorzugsweise auf 0,5 bis 40 g/L, noch mehr bevorzugt auf 1 bis 30 g/L, noch mehr bevorzugt auf 2 bis 20 g/L auf.

Mit dem erfindungsgemäßen Verfahren können Ligninpartikel auch durch Reduktion des pH Werts und der Konzentration des organischen Lösungsmittels durch Zugabe von verdünnten Säuren oder Wasser hergestellt werden. Dadurch können sich Ligninpartikel ausbilden.

Gemäß einer bevorzugten Ausführungsform der vorliegenden Erfindung wird der pH Wert durch Zugabe von Wasser, vorzugsweise destillierten oder entionisierten Wasser, und/oder einer Säure ausgewählt aus der Gruppe bestehend aus Schwefelsäure, Phosphorsäure, Salpetersäure oder einer organischen Säure gesenkt, besonders bevorzugt durch Zugabe von Schwefelsäure. Es ist besonders bevorzugt die Säure mit Wasser verdünnt zur Fällung in Schritt b) dazuzugeben, um den für die Fällung erforderlichen pH Wert zu erreichen.

Die organische Säure, die zur Senkung des pH-Werts des ligninhaltigen Extrakts nach Schritt a) eingesetzt werden kann, ist vorzugsweise eine C1 bis C5 Carbonsäure, vorzugsweise Ameisensäure, Essigsäure, Propionsäure oder Buttersäure.

Gemäß einer bevorzugten Ausführungsdorm der vorliegenden Erfindung liegt vor der Fällung der pH Wert der Lösung aus Schritt b) im Bereich von 1 bis 6, vorzugsweise auf 2 bis 5,5, noch mehr bevorzugt auf 3 bis 5,3, noch mehr bevorzugt auf 4 bis 5,2, oder wird durch Zugabe von Säuren bzw. Wasser-Säure Gemischen wie oben angeführt entsprechend eingestellt.
Gemäß einer bevorzugten Ausführungsform der vorliegenden Erfindung wird der pH Wert durch Zugabe einer Säure mit einer spezifischen Dosiergeschwindigkeit von 0,05 bis 10 mL/min pro g Extraktlösung, vorzugsweise von 0,05 bis 8 mL/min pro g Extraktlösung, noch mehr bevorzugt von 0,05 bis 6 mL/min pro g Extraktlösung, noch mehr bevorzugt von 0,05 bis 4 mL/min pro g Extraktlösung, noch mehr bevorzugt von 0,08 bis 8 mL/min pro g Extraktlösung, noch mehr bevorzugt von 0,08 bis 6 mL/min pro g Extraktlösung, noch mehr bevorzugt von 0,08 bis 4 mL/min pro g Extraktlösung, noch mehr bevorzugt von 0,08 bis 3 mL/min pro g Extraktlösung, noch mehr bevorzugt von 0,08 bis 2,5 mL/min pro g Extraktlösung, noch mehr bevorzugt von 0,1 bis 2 mL/min pro g Extraktlösung, noch mehr bevorzugt von 0,1 bis 8 mL/min pro g Extraktlösung, noch mehr bevorzugt von 0,1 bis 6 mL/min pro g Extraktlösung, noch mehr bevorzugt von 0,1 bis 4 mL/min pro g Extraktlösung, noch mehr bevorzugt von 0,1 bis 3 mL/min pro g Extraktlösung, noch mehr bevorzugt von 0,1 bis 2,5 mL/min pro g Extraktlösung, noch mehr bevorzugt von 0,1 bis 2 mL/min pro g Extraktlösung, gesenkt wird.

Es hat sich überraschender Weise gezeigt, dass es von Vorteil ist, wenn der pH Wert und die Konzentration des organischen Lösungsmittels der Lignin-haltigen Extraktionslösung in einer bestimmten Geschwindigkeit gesenkt wird.

Die gefällten Ligninpartikel bzw. das Nanolignin können nach dem Fällschritt isoliert, mit Wasser gewaschen und gegebenenfalls getrocknet werden.

In diesen letzten Verfahrensschritten bei der Herstellung von Ligninpartikeln ist es besonders vorteilhaft, wenn die gefällten Ligninpartikel nach Schritt b), vorzugsweise anstelle mit Wasser mit einer Lösung mit einem pH Wert von 1 bis 5, vorzugsweise von 1,5 bis 4, noch mehr bevorzugt von 1,5 bis 3, noch mehr bevorzugt von 2 bis 3, gewaschen werden. Diese Lösung kann die bereits oben genannten organischen und/oder anorganischen Säuren umfassen, um den pH Wert entsprechend zu senken, wobei besonders bevorzugt Schwefelsäure eingesetzt wird. Alternativ dazu können die Ligninpartikel auch mit Wasser, destillierten oder entionisierten Wasser gewaschen werden.

Die vorliegende Erfindung wird anhand der folgenden Beispiele und Figuren eingehender erläutert, ohne jedoch auf diese beschränkt zu sein.

Ein weiterer Aspekt der vorliegenden Erfindung betrifft Ligninpartikel, die mit einem erfindungsgemäßen Verfahren herstellbar sind. Aufgrund des speziellen Herstellungsverfahren weisen die erfindungsgemäß hergestellten Ligninpartikel eine besondere Reinheit gegenüber herkömmlich hergestellten Ligninpartikel auf, wobei die erfindungsgemäßen Ligninpartikel schwefel-frei sind, da sich beim gesamten Verfahrensablauf kein Schwefel an die chemische Struktur des Lignins gebunden wurde.
Fig. 1 zeigt eine Aufnahme der Ligninpartikel, die mit dem erfindungsgemäßen Verfahren hergestellt werden können, mit einem Rasterelektronenmikroskop.
Fig. 2 zeigt die Größenverteilung von Ligninpartikel, die aus Lignin-haltigen Extrakten gefällt wurden, die bei unterschiedlichen Temperaturen hergestellt wurden.
Fig. 3 zeigt eine Vorrichtung zur Fällung von Ligninpartikel, die einen Behälter zur Aufnahme eines Lignin-haltigen Extrakts umfasst, in dem sich ein an einen Motor gekoppeltes Rührelement befindet. Der Behälter ist über einen Titrator mit einem Fällmittelbehälter verbunden.
Fig. 4 zeigt die Größenverteilung von Ligninpartikel, die aus Lignin-haltigen Extrakten mit unterschiedlichen Dosiergeschwindigkeiten des Fällmittels gefällt wurden.
Fig. 5 zeigt Fällapparturen mit T-Mischer (T-Stück), in dem sich die Extraktlösung und das Fällmittel vermischen (Fig. 5A und B). Nach dem T-Mischer können statische Mischelemente verbaut sein (Fig. 5B).
Fig. 6 zeigt die Größenverteilung von Ligninpartikel, die aus Lignin-haltigen Extrakten mit unterschiedlichen Vorrichtungen gefällt wurden.
Fig. 7 zeigt eine Vorrichtung zur destillativen Fällung von Ligninpartikel aus einem Lignin-haltigen und Lösungsmittelhaltigen Extrakt (siehe Beispiel 1). In einem zusätzlichen Behälter befindet sich Wasser bzw. Fällmittel (z.B. verdünnte Schwefelsäure) zur zumindest teilweisen Konstanthaltung des Sumpfstandes mittels Zudosierung.
Fig. 8 zeigt die Größenverteilung von Ligninpartikel, die aus einem Lignin-haltigen Extrakt mittels destillativer Fällung bei einer definierten Reduktionsgeschwindigkeit des organischen Lösungsmittels im Extrakt von 0,29 Gew%/min.

### BEISPIELE:

### Beispiel 1: Herstellung der Ligninhältigen Lösung

Aus Weizenstroh (alternative kann auch ein anderer lignozellulosehaltige Rohstoff wie Holz verwendet werden) wurde das Lignin durch eine geeignete Prozessführung herausgelöst. Der Rohstoff wurde vor der Extraktion durch Vermahlen zerkleinert und je nach Reaktorgröße gesiebt (bei einem Laborreaktor mit einem Innenvolumen von 1L betrug die Größe der Strohpartikel 1-5 mm und bei einem technischen Reaktor mit einem Innenvolumen von 10 bis 50L 5-20 mm).

Die Extraktion des Lignins aus dem zerkleinerten und gesiebten Rohstoff wurde in einem Druckreaktor mit einer Ethanol/Wasser Mischung mit einer Ethanolkonzentration von 60 Gew% bei einer Temperatur von 180°C und einer Verweilzeit von 60 Minuten durchgeführt. Anschließend wurde das Gemisch auf Raumtemperatur abgekühlt. Dann wurde das verbleibende Stroh von der Aufschlusslösung durch Filtration abgetrennt, und mit einer Ethanol/Wasser Mischung mit einer Ethanolkonzentration von 60 Gew% gewaschen und erneut durch Filtration getrennt. Die daraus isolierte Waschlösung wurde mit der Aufschlusslösung vereinigt bzw. getrennt weiterverarbeitet. Die Aufschlusslösung bzw. die Waschlösung wurden durch Zentrifugation bei ca. 14.000 U/min und Feinfiltration partikelfrei gemacht. Danach wurde aus der erzeugten Lösung direkt das Nanolignin gefällt (siehe Beispiele 2 bis 4).

### Beispiel 2: Destillative Fällung von Ligninpartikel

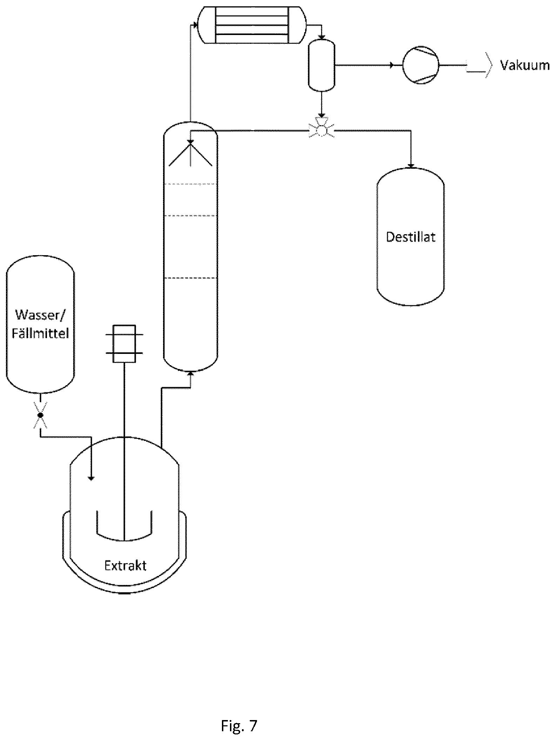

Die destillative Fällung von Lignin aus einem Extrakt gemäß Beispiel 1 wurde mit einer in Fig. 7 gezeigten Apparatur durchgeführt. Diese besteht prinzipiell aus einer Vakuumdestillationskolonne und einem Sumpfkolben der durch ein Wasserbad beheizt wurde. Zudem konnte Wasser bzw. Wasser mit Schwefelsäure (pH 2) zu dosiert werden um den Sumpfstand konstant zu halten und Verkrustungen am Sumpfkolben zu minimieren. Die Temperatur des Sumpfes und des Kopfes sowie die zu dosierte Menge an Wasser bzw. Schwefelsäure mit Wasser wurden während des gesamten Versuches aufgezeichnet.

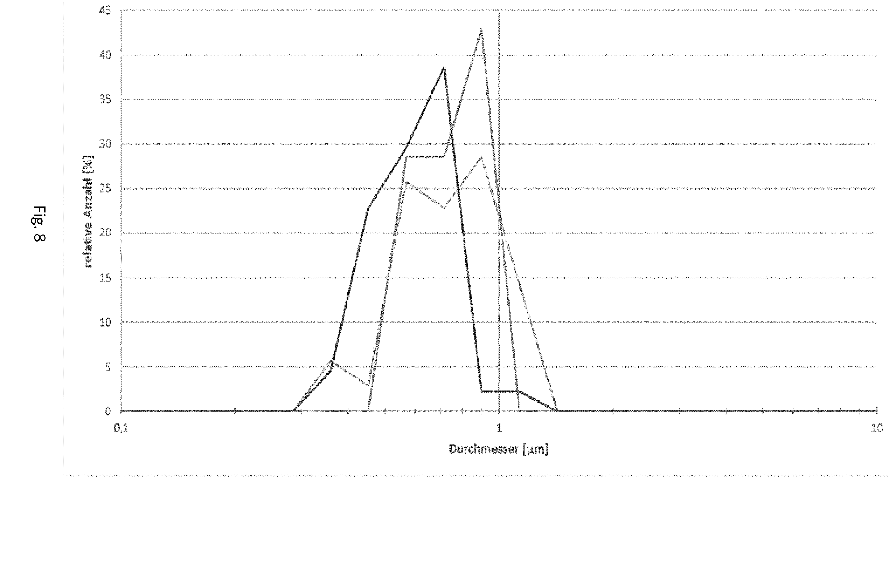

Der Ethanolgehalt im Lignin-haltigen Extrakt gemäß Beispiel 1 betrug vor Beginn der Destillation 54,68 Gew%. Die Destillationsbedingungen wurden so gewählt, dass die Reduktionsgeschwindigkeit des Ethanols im Extrakt 0,29 Gew% Ethanol/min betrug. In derselben Geschwindigkeit wurde Wasser zudosiert. Am Ende der Destillation wurde eine Sumpfprodukt erhalten, das 4,68 Gew% des Ausgangsextrakts betrug. Anschließend wurden die gefällten Partikel mit Wasser gewaschen. Die Größe der mit diesem Verfahren hergestellten Ligninpartikel betrug im Wesentlichen weniger als 1 µm (siehe Fig. 8).

### Beispiel 3: Fällung von Nanolignin durch Absenkung des pH Werts

Eine Lösung aus Beispiel 1 mit einer Ligninkonzentration von 5 bis 15 g/L wurde zur Fällung des Lignins mittels Absenkung des pH Wertes herangezogen. Zur Fällung wurde die ligninhaltige Lösung vorgelegt und verdünnte Schwefelsäure mit pH 1 oder pH 2 oder 98%ige Schwefelsäure unter konstantem Rühren zugegeben bis der pH Wert der entstehenden Dispersion bei ca. 2-2,3 angelangt war. Alternativ dazu wurde in einem weiteren Ansatz Essigsäure zur Senkung des pH-Wertes eingesetzt, wobei in diesem Fall der pH Wert auf ca. 3,3 gesenkt wurde. Der Niederschlag wurde anschließend per Zentrifugation abgetrennt und bei ca. 40°C getrocknet.

### Beispiel 4: Partikelgrößenverteilung mit Extrakten verschiedener Aufschlusstemperaturen

Um den Einfluss der Aufschlusstemperatur auf die Partikelgrößenverteilung zu untersuchen, wurde die Extraktion des Lignins gemäß Beispiel 1 mit 160°C, 180°C und 200°C durchgeführt. Anschließend wurden der Extrakt filtriert und zentrifugiert (24.000 x g), um nicht lösliche Partikel aus dem Extrakt zu entfernen. Aus dem partikelfreien Extrakt wurden schließlich Ligninpartikel gemäß Beispiel 3 gefällt.

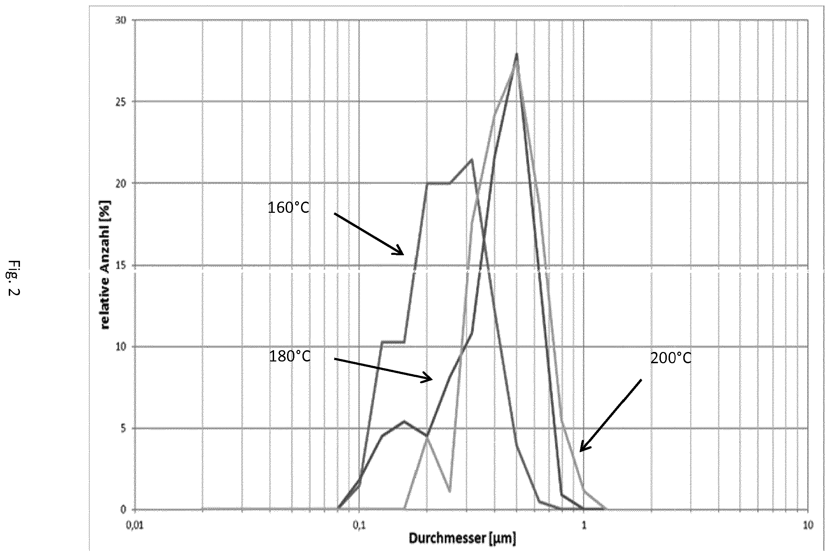

Aus Fig. 2 geht hervor, dass mit Extrakten, die mit obigen Aufschlusstemperaturen hergestellt wurden, Ligninpartikel gefällt werden können, die größtenteils einen Durchmesser von weniger als 1 µm aufweisen. Es zeigte sich insbesondere, dass eine Aufschlusstemperatur von 180°C bzw. 200°C zu einer homogeneren Größenverteilung der Ligninpartikel führt.

### Beispiel 5: Einfluss der Dosiergeschwindigkeit (Zugabe einer Säure zu einer Ligninlösung) auf die Bildung von Ligninpartikel

In diesem Beispiel wird der Einfluss der Geschwindigkeit der Zugabe einer Säure auf die Bildung von Ligninpartikel aus einer Lignin-haltigen Extraktionslösung gemäß Beispiel 1.

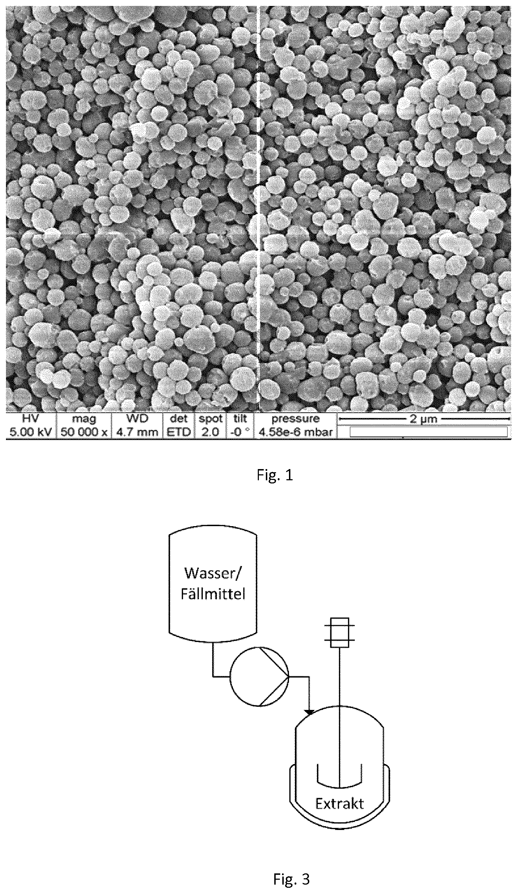

Der Weizenstrohextrakt von Beispiel 1 wurde in eine Rührapparatur gemäß Fig. 3 eingebracht. Mithilfe eines Titrators wurde temperierte Schwefelsäure (pH 2) in die temperierte (25°C) Rührapparatur, in der das Weizenstrohextrakt vorgelegt wurde, zudosiert. Dabei wurden verschiedene Dosiergeschwindigkeiten verwendet, um den Einfluss der Dosiergeschwindigkeit zu bestimmen (die Parameter sind Tabelle 1 zu entnehmen).

**Tabelle 1: Details der Fällungen bei verschiedenen Dosiergeschwindigkeiten**

| Dosiergeschwindigkeit | [ml/min] | 1 | 4 | 50,9 |
|---|---|---|---|---|
| Extrakt | [g] | 30, 62 | 34,07 | 26, 17 |
| Dosierte Menge | [ml] | 116 | 134 | 116 |
| Spezifische Dosiergeschwindigkeit bezogen auf Extraktmasse | [ml/min*g] | 0, 03 | 0, 12 | 1, 94 |

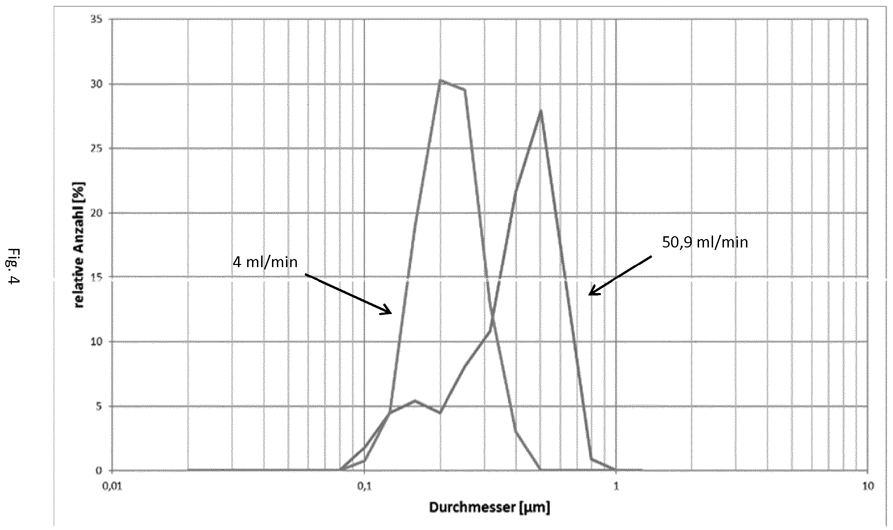

Nach Fällung der Ligninpartikel wurden diese durch zentrifugation abgetrennt und mittels REM Aufnahmen untersucht. Dabei wurde festgestellt, dass bei einer Dosiergeschwindigkeit der Säure von 1 ml/min bzw. 0,03 ml/min pro g Extrakt keine erkennbaren Einzelpartikel vorhanden waren. Bei Dosiergeschwindigkeiten von 4 ml/min bzw. 0,12 ml/min pro g Extrakt und 50,9 ml/min bzw. 1,94 ml/min pro g Extrakt konnte die Bildung von Ligninpartikel festgestellt werden. Die Größenverteilung der Ligninpartikel wird in Fig. 4 gezeigt. Bei beiden Dosiergeschwindigkeiten konnten Ligninpartikel mit einer Größe von weniger als 1 µm hergestellt werden.

### Beispiel 6: Einfluss der Fällapparatur auf die Bildung von Ligninpartikel

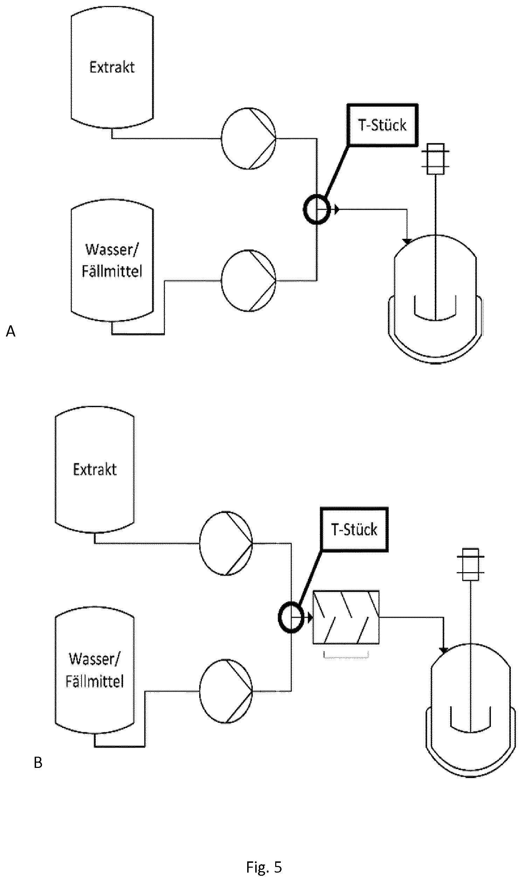

Um zu untersuchen, ob die Fällapparatur einen Einfluss auf die Größe bzw. Größenverteilung der Ligninpartikel hat, wurde die Fällung von Ligninpartikel aus einem Extrakt gemäß Beispiel 1 in Vorrichtungen gemäß Fig. 3 und Fig. 5 (ohne (A) und mit (B) Mischelementen) durchgeführt.

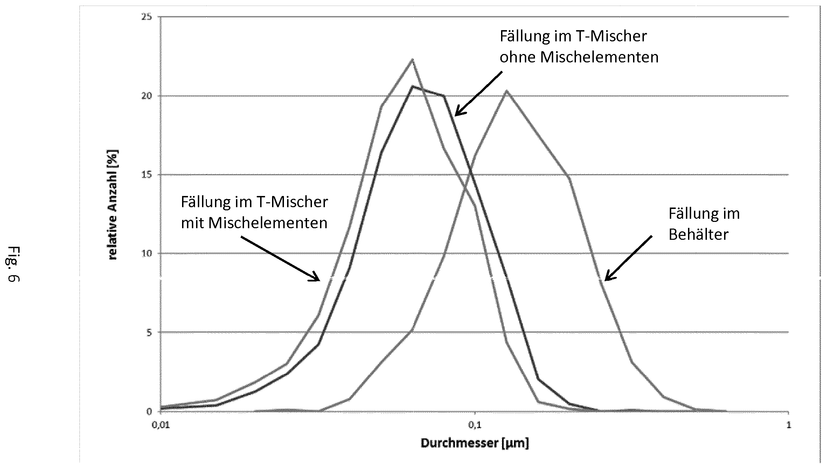

Die in Fig. 6 dargestellten Ergebnisse zeigen, dass mit allen drei Vorrichtungen Ligninpartikel erzeugt werden konnten, die kleiner als 1 µm sind.

## Patentansprüche

1. Verfahren zur Herstellung von Ligninpartikel mit einer mittleren Größe von 10 bis 800 nm umfassend die Schritte
a) Extraktion von Lignin aus einem ligninhaltigen Ausgangsmaterial mittels eines Gemisches umfassend mindestens ein organisches Lösungsmittel und Wasser und
b) Fällung des in Lösung befindlichen Lignins aus Schritt a), wobei das in Lösung befindliche Lignin durch Senkung des pH Werts in Schritt b) gefällt wird, wobei der pH Wert durch Zugabe einer Säure mit einer spezifischen Dosiergeschwindigkeit von 0,05 bis 10 mL/min pro g Extraktlösung gesenkt wird.

2. Verfahren nach Anspruch 1, **dadurch gekennzeichnet, dass** in der Lösung aus Schritt a) vorhandene nicht lösliche Bestandteilen vor Schritt b) entfernt werden, vorzugsweise wobei die zur Fällung bestimmte Lösung in Schritt b) maximal 1%, vorzugsweise maximal 0,8%, noch mehr bevorzugt maximal 0,5%, noch mehr bevorzugt maximal 0,3%, noch mehr bevorzugt maximal 0,2%, nicht lösliche Bestandteilen umfasst, insbesondere frei von nicht löslichen Bestandteilen ist.

3. Verfahren nach Anspruch 1 oder 2, **dadurch gekennzeichnet, dass** das in Lösung befindliche Lignin durch Senkung des pH Werts durch Zugabe eines Säure/Wasser Gemischs reduziert wird.

4. Verfahren nach einem der Ansprüche 1 bis 3, **dadurch gekennzeichnet, dass** das in Lösung befindliche Lignin vor dessen Fällung auf 0,1 bis 50 g Lignin/L organisches Lösungsmittel/Wasser Gemisch, vorzugsweise auf 0,5 bis 40 g/L, noch mehr bevorzugt auf 1 bis 30 g/L, noch mehr bevorzugt auf 2 bis 20 g/L, eingestellt wird.

5. Verfahren nach einem der Ansprüche 1 bis 4, **dadurch gekennzeichnet, dass** der pH Wert des organischen Lösungsmittel/Wasser Gemisches nach dem Fällen der Ligninpartikel im Bereich von 1 bis 6, vorzugsweise auf 2 bis 5,5, noch mehr bevorzugt auf 3 bis 5,3, noch mehr bevorzugt auf 4 bis 5,2 liegt.

6. Verfahren nach einem der Ansprüche 1 bis 5, **dadurch gekennzeichnet, dass** der pH Wert durch Zugabe einer Säure mit einer spezifischen Dosiergeschwindigkeit von 0,05 bis 8 mL/min pro g Extraktlösung, bevorzugt von 0,05 bis 6 mL/min pro g Extraktlösung, noch mehr bevorzugt von 0,05 bis 4 mL/min pro g Extraktlösung, noch mehr bevorzugt von 0,08 bis 8 mL/min pro g Extraktlösung, noch mehr bevorzugt von 0,08 bis 6 mL/min pro g Extraktlösung, noch mehr bevorzugt von 0,08 bis 4 mL/min pro g Extraktlösung, noch mehr bevorzugt von 0,08 bis 3 mL/min pro g Extraktlösung, noch mehr bevorzugt von 0,08 bis 2,5 mL/min pro g Extraktlösung, noch mehr bevorzugt von 0,1 bis 2 mL/min pro g Extraktlösung, noch mehr bevorzugt von 0,1 bis 8 mL/min pro g Extraktlösung, noch mehr bevorzugt von 0,1 bis 6 mL/min pro g Extraktlösung, noch mehr bevorzugt von 0,1 bis 4 mL/min pro g Extraktlösung, noch mehr bevorzugt von 0,1 bis 3 mL/min pro g Extraktlösung, noch mehr bevorzugt von 0,1 bis 2,5 mL/min pro g Extraktlösung, noch mehr bevorzugt von 0,1 bis 2 mL/min pro g Extraktlösung, gesenkt wird.

7. Verfahren nach einem der Ansprüche 1 bis 6, **dadurch gekennzeichnet, dass** die gefällten Ligninpartikel nach Schritt b), vorzugsweise mit einer Lösung mit einem pH Wert von 1 bis 5, vorzugsweise von 1,5 bis 4, noch mehr bevorzugt von 1,5 bis 3, noch mehr bevorzugt von 2 bis 3, oder mit Wasser gewaschen werden.

8. Verfahren nach einem der Ansprüche 1 bis 7, **dadurch gekennzeichnet, dass** das Gemisch umfassend mindestens ein organisches Lösungsmittel und Wasser 10 bis 90 Gew%, vorzugsweise 20 bis 80 Gew%, noch mehr bevorzugt 30 bis 70 Gew%, noch mehr bevorzugt 40 bis 60 Gew%, noch mehr bevorzugt 50 bis 65 Gew%, organisches Lösungsmittel umfasst.

9. Verfahren nach einem der Ansprüche 1 bis 8, **dadurch gekennzeichnet, dass** das mindestens eine organische Lösungsmittel ein Alkohol ist, wobei der Alkohol vorzugsweise ein C1 bis C5 Alkohol ist, welcher vorzugsweise ausgewählt ist aus der Gruppe bestehend Methanol, Ethanol, Propanol, Butanol, Pentanol, Ethan-1,2-diol, Propan-1,2-diol, Propan-1,2,3-triol, Butan-1,2,3,4-tetraol und Pentan-1,2,3,4,5-pentol; oder ein Keton ist, wobei das mindestens eine Keton ausgewählt ist aus der Gruppe bestehend aus Aceton und 2-Butanone.

10. Verfahren nach einem der Ansprüche 1 bis 9, **dadurch gekennzeichnet, dass** die Extraktion bei einer Temperatur von 100 bis 230°C, vorzugsweise von 120 bis 230°C, noch mehr bevorzugt von 140 bis 210°C, noch mehr bevorzugt von 150 bis 200°C, noch mehr bevorzugt von 160 bis 200°C, noch mehr bevorzugt von 170 bis 200°C, noch mehr bevorzugt von 170 bis 195°C, noch mehr bevorzugt von 175 bis 190°C, durchgeführt wird.

11. Verfahren nach einem der Ansprüche 1 bis 10, **dadurch gekennzeichnet, dass** die Extraktion bei einem Druck von 1 bis 100 bar, vorzugsweise 1,1 bis 90 bar, noch mehr bevorzugt 1,2 bis 80 bar, noch mehr bevorzugt 1,3, bis 70 bar, noch mehr bevorzugt 1,4 bis 60 bar, durchgeführt wird.

12. Verfahren nach einem der Ansprüche 1 bis 11, **dadurch gekennzeichnet, dass** die Extraktion für 5 bis 200 Minuten, vorzugsweise für 10 bis 150 Minuten, noch mehr bevorzugt für 15 bis 100 Minuten, noch mehr bevorzugt für 15 bis 80 Minuten, noch mehr bevorzugt für 30 bis 70 Minuten, noch mehr bevorzugt für 55 bis 65 Minuten, durchgeführt wird.

13. Verfahren nach einem der Ansprüche 1 bis 12, **dadurch gekennzeichnet, dass** das ligninhaltige Ausgangsmaterial ausgewählt ist aus der Gruppe bestehend der Mehrjahrespflanzen, vorzugsweise Holz, Holzabfälle oder Strauchschnitt und Einjahrespflanzen, vorzugsweise Stroh, wobei das ligninhaltige Ausgangsmaterial vorzugsweise eine mittlere Größe von 0,5 bis 50 mm, vorzugsweise von 0,5 bis 40 mm, noch mehr bevorzugt von 0,5 bis 30 mm, noch mehr bevorzugt von 1 bis 25 mm, noch mehr bevorzugt von 1 bis 20 mm, noch mehr bevorzugt von 5 bis 10 mm, aufweist.

14. Verfahren nach einem der Ansprüche 1 bis 13, **dadurch gekennzeichnet, dass** im Extraktionsgemisch vorhandene feste Partikel nach Schritt a) entfernt werden, um einen ligninhaltigen Überstand zu erhalten, vorzugsweise wobei die vom Extraktionsgemisch abgetrennten festen Partikel mit demselben Gemisch aus Schritt a) umfassend mindestens ein organisches Lösungsmittel und Wasser behandelt werden und der daraus erhaltene Überstand dem ligningaltigen Überstand aus Anspruch 6 zugeführt wird.

15. Ligninpartikel herstellbar nach einem Verfahren gemäß einem der Ansprüche 1 bis 14.

## Claims

1. A process for the production of lignin particles with an average size of 10 to 800 nm comprising the steps of
a) extracting lignin from a lignin-containing starting material by using a mixture comprising at least one organic solvent and water, and
b) precipitating the lignin in solution from step a), wherein the lignin in solution is precipitated by decreasing the pH in step b), wherein the pH value is lowered by adding an acid at a specific dosing rate of 0.05 to 10 mL/min per g of extract solution.

2. The process as claimed in claim 1, **characterized in that** insoluble components present in the solution from step a) are removed prior to step b) preferably wherein the solution for precipitation in step b) comprises a maximum of 1%, preferably a maximum of 0.8%, yet more preferably a maximum of 0.5%, yet more preferably a maximum of 0.3%, yet more preferably a maximum of 0.2% of insoluble components, and in particular is free from insoluble components.

3. The process as claimed in claim 1 or 2, **characterized in that** the lignin in solution is reduced by decreasing the pH by adding an acid/water mixture.

4. The process as claimed in one of claims 1 to 3, **characterized in that** prior to precipitating it out, the lignin in solution is adjusted to 0.1 to 50 g of lignin/L of organic solvent/water mixture, preferably to 0.5 to 40 g/L, yet more preferably to 1 to 30 g/L, yet more preferably to 2 to 20 g/L.

5. The process as claimed in one of claims 1 to 4, **characterized in that** after precipitation of the lignin particles, the pH of the organic solvent/water mixture lies in a range of 1 to 6, preferably 2 to 5.5, yet more preferably 3 to 5.3, yet more preferably 4 to 5.2.

6. The process as claimed in one of claims 1 to 5, **characterized in that** the pH is decreased by adding an acid at a specific dosing rate of 0.05 to 8 mL/min per g of extract solution, preferably 0.05 to 6 mL/min per g of extract solution, yet more preferably 0.05 to 4 mL/min per g of extract solution, yet more preferably 0.08 to 8 mL/min per g of extract solution, yet more preferably 0.08 to 6 mL/min per g of extract solution, yet more preferably 0.08 to 4 mL/min per g of extract solution, yet more preferably 0.08 to 3 mL/min per g of extract solution, yet more preferably 0.08 to 2.5 mL/min per g of extract solution, yet more preferably 0.1 to 2 mL/min per g of extract solution, yet more preferably 0.1 to 8 mL/min per g of extract solution, yet more preferably 0.1 to 6 mL/min per g of extract solution, yet more preferably 0.1 to 4 mL/min per g of extract solution, yet more preferably 0.1 to 3 mL/min per g of extract solution, yet more preferably 0.1 to 2.5 mL/min per g of extract solution, yet more preferably 0.1 to 2 mL/min per g of extract solution.

7. The process as claimed in one of claims 1 to 6, **characterized in that** after step b), the precipitated lignin particles are washed, preferably with a solution having a pH of 1 to 5, preferably 1.5 to 4, yet more preferably 1.5 to 3, yet more preferably 2 to 3, or with water.

8. The process as claimed in one of claims 1 to 7, **characterized in that** the mixture comprising at least one organic solvent and water comprises 10% to 90% by weight, preferably 20% to 80% by weight, yet more preferably 30% to 70% by weight, yet more preferably 40% to 60% by weight, yet more preferably 50% to 65% by weight of organic solvent.

9. The process as claimed in one of claims 1 to 8, **characterized in that** the at least one organic solvent is an alcohol, wherein the alcohol is preferably a C1 to C5 alcohol, which is preferably selected from the group consisting of methanol, ethanol, propanol, butanol, pentanol, ethane-1,2-diol, propane-1,2-diol, propane-1,2,3-triol, butane-1,2,3,4-tetraol and pentane-1,2,3,4,5-pentol; or a ketone, wherein the at least one ketone is selected from the group consisting of acetone and 2-butanone.

10. The process as claimed in one of claims 1 to 9, **characterized in that** the extraction is carried out at a temperature of 100°C to 230°C, preferably 120°C to 230°C, yet more preferably 140°C to 210°C, yet more preferably 150°C to 200°C, yet more preferably 160°C to 200°C, yet more preferably 170°C to 200°C, yet more preferably 170°C to 195°C, yet more preferably 175°C to 190°C.

11. The process as claimed in one of claims 1 to 10, **characterized in that** the extraction is carried out at a pressure of 1 to 100 bar, preferably 1.1 to 90 bar, yet more preferably 1.2 to 80 bar, yet more preferably 1.3 to 70 bar, yet more preferably 1.4 to 60 bar.

12. The process as claimed in one of claims 1 to 11, **characterized in that** the extraction is carried out for 5 to 200 minutes, preferably 10 to 150 minutes, yet more preferably 15 to 100 minutes, yet more preferably 15 to 80 minutes, yet more preferably 30 to 70 minutes, yet more preferably 55 to 65 minutes.

13. The process as claimed in one of claims 1 to 12, **characterized in that** the lignin-containing starting material is selected from the group consisting of perennials, preferably wood, wood waste or shrub cuttings, and annuals, preferably straw, wherein the lignin-containing starting material preferably has a mean size of 0.5 to 50 mm, preferably 0.5 to 40 mm, yet more preferably 0.5 to 30 mm, yet more preferably 1 to 25 mm, yet more preferably 1 to 20 mm, yet more preferably 5 to 10 mm.

14. The process as claimed in one of claims 1 to 13, **characterized in that** solid particles present in the extraction mixture are removed after step a) in order to obtain a lignin-containing supernatant, preferably wherein the solid particles separated from the extraction mixture are treated with the same mixture from step a) comprising at least one organic solvent and water and the supernatant obtained therefrom is fed to the lignin-containing supernatant from claim 6.

15. Lignin particles obtainable by a process as claimed in one of claims 1 to 14.

## Revendications

1. Procédé de production de particules de lignine ayant une taille moyenne de 10 à 800 nm, comprenant les étapes de
a) extraction de lignine à partir d'un matériau de départ contenant de la lignine au moyen d'un mélange comprenant au moins un solvant organique et de l'eau, et
b) précipitation de la lignine se trouvant en solution de l'étape a), dans lequel la lignine se trouvant en solution est précipitée par l'abaissement de la valeur de pH à l'étape b), dans lequel la valeur de pH est abaissée par l'ajout d'un acide avec une vitesse de dosage spécifique de 0,05 à 10 mL/min par g de solution d'extrait.

2. Procédé selon la revendication 1, **caractérisé en ce que** des composants non solubles présents dans la solution de l'étape a) sont éliminés avant l'étape b), de préférence dans lequel la solution destinée à la précipitation à l'étape b) comprend au maximum 1 %, de préférence au maximum 0,8 %, encore plus de préférence au maximum 0,5 %, encore plus de préférence au maximum 0,3 %, encore plus de préférence au maximum 0,2 % de composants non solubles, en particulier est exempte de composants non solubles.

3. Procédé selon la revendication 1 ou 2, **caractérisé en ce que** la lignine se trouvant en solution est réduite par l'abaissement de la valeur de pH par l'ajout d'un mélange acide/eau.

4. Procédé selon l'une des revendications 1 à 3, **caractérisé en ce que** la lignine se trouvant en solution, avant sa précipitation, est ajustée à 0,1 à 50 g de lignine/L de mélange solvant organique/eau, de préférence à 0,5 à 40 g/L, encore plus de préférence à 1 à 30 g/L, encore plus de préférence à 2 à 20 g/L.

5. Procédé selon l'une des revendications 1 à 4, **caractérisé en ce que** la valeur de pH du mélange solvant organique/eau, après la précipitation des particules de lignine, se situe dans la plage de 1 à 6, de préférence de 2 à 5,5, encore plus de préférence de 3 à 5,3, encore plus de préférence de 4 à 5,2.

6. Procédé selon l'une des revendications 1 à 5, **caractérisé en ce que** la valeur de pH est abaissée par l'ajout d'un acide avec une vitesse de dosage spécifique de 0,05 à 8 mL/min par g de solution d'extrait, de préférence de 0,05 à 6 mL/min par g de solution d'extrait, encore plus de préférence de 0,05 à 4 mL/min par g de solution d'extrait, encore plus de préférence de 0,08 à 8 mL/min par g de solution d'extrait, encore plus de préférence de 0,08 à 6 mL/min par g de solution d'extrait, encore plus de préférence de 0,08 à 4 mL/min par g de solution d'extrait, encore plus de préférence de 0,08 à 3 mL/min par g de solution d'extrait, encore plus de préférence de 0,08 à 2,5 mL/min par g de solution d'extrait, encore plus de préférence de 0,1 à 2 mL/ min par g de solution d'extrait, encore plus de préférence de 0,1 à 8 mL/min par g de solution d'extrait, encore plus de préférence de 0,1 à 6 mL/min par g de solution d'extrait, encore plus de préférence de 0,1 à 4 mL/min par g de solution d'extrait, encore plus de préférence de 0,1 à 3 mL/min par g de solution d'extrait, encore plus de préférence de 0,1 à 2,5 mL/ min par g de solution d'extrait, encore plus de préférence de 0,1 à 2 mL/min par g de solution d'extrait.

7. Procédé selon l'une des revendications 1 à 6, **caractérisé en ce que** les particules de lignine précipitées sont lavées après l'étape b), de préférence avec une solution ayant une valeur de pH de 1 à 5, de préférence de 1,5 à 4, encore plus de préférence de 1,5 à 3, encore plus de préférence de 2 à 3, ou avec de l'eau.

8. Procédé selon l'une des revendications 1 à 7, **caractérisé en ce que** le mélange comprenant au moins un solvant organique et de l'eau comprend de 10 à 90 % en poids, de préférence de 20 à 80 % en poids, encore plus de préférence de 30 à 70 % en poids, encore plus de préférence de 40 à 60 % en poids, encore plus de préférence de 50 à 65 % en poids de solvant organique.

9. Procédé selon l'une des revendications 1 à 8, **caractérisé en ce que** ledit au moins un solvant organique est un alcool, dans lequel l'alcool est de préférence un alcool en C1 à C5, lequel est de préférence choisi dans le groupe constitué par le méthanol, l'éthanol, le propanol, le butanol, le pentanol, l'éthane-1,2-diol, le propane-1,2-diol, le propane-1,2,3-triol, le butane-1,2,3,4-tétraol et le pentane-1,2,3,4,5-pentol ; ou est une cétone, dans lequel ladite au moins une cétone est choisie dans le groupe constitué par l'acétone et la 2-butanone.

10. Procédé selon l'une des revendications 1 à 9, **caractérisé en ce que** l'extraction est effectuée à une température de 100 à 230 °C, de préférence de 120 à 230 °C, encore plus de préférence de 140 à 210 °C, encore plus de préférence de 150 à 200 °C, encore plus de préférence de 160 à 200 °C, encore plus de préférence de 170 à 200 °C, encore plus de préférence de 170 à 195 °C, encore plus de préférence de 175 à 190 °C.

11. Procédé selon l'une des revendications 1 à 10, **caractérisé en ce que** l'extraction est effectuée à une pression de 1 à 100 bar, de préférence de 1,1 à 90 bar, encore plus de préférence de 1,2 à 80 bar, encore plus de préférence de 1,3 à 70 bar, encore plus de préférence de 1,4 à 60 bar.

12. Procédé selon l'une des revendications 1 à 11, **caractérisé en ce que** l'extraction est effectuée pendant 5 à 200 minutes, de préférence pendant 10 à 150 minutes, encore plus de préférence pendant 15 à 100 minutes, encore plus de préférence pendant 15 à 80 minutes, encore plus de préférence pendant 30 à 70 minutes, encore plus de préférence pendant 55 à 65 minutes.

13. Procédé selon l'une des revendications 1 à 12, **caractérisé en ce que** le matériau de départ contenant de la lignine est choisi dans le groupe constitué par les plantes pérennes, de préférence le bois, les déchets de bois ou les tailles d'arbustes, et les plantes annuelles, de préférence la paille, dans lequel le matériau de départ contenant de la lignine présente de préférence une taille moyenne de 0,5 à 50 mm, de préférence de 0,5 à 40 mm, encore plus de préférence de 0,5 à 30 mm, encore plus de préférence de 1 à 25 mm, encore plus de préférence de 1 à 20 mm, encore plus de préférence de 5 à 10 mm.

14. Procédé selon l'une des revendications 1 à 13, **caractérisé en ce que** des particules solides présentes dans le mélange d'extraction sont éliminées après l'étape a) afin d'obtenir un surnageant contenant de la lignine, de préférence dans lequel les particules solides séparées du mélange d'extraction sont traitées avec le même mélange de l'étape a) comprenant au moins un solvant organique et de l'eau, et le surnageant obtenu à partir de cela est ajouté au surnageant contenant de la lignine de la revendication 6.

15. Particules de lignine susceptibles d'être obtenues par un procédé selon l'une des revendications 1 à 14.
